Europäisches Patentamt

European Patent Office

Office européen des brevets

(11) Publication number : **0 592 144 A1**

# EUROPEAN PATENT APPLICATION

(21) Application number : **93307742.2**

(51) Int. Cl.$^5$ : **C08L 71/12**

(22) Date of filing : **29.09.93**

(30) Priority : **07.10.92 US 957120**

(43) Date of publication of application :
**13.04.94 Bulletin 94/15**

(84) Designated Contracting States :
**DE ES FR GB IT NL**

(71) Applicant : **GENERAL ELECTRIC COMPANY**
**1 River Road**
**Schenectady, NY 12345 (US)**

(72) Inventor : **Richards, William David**
**22 Heritage Parkway**
**Scotia, New York 12302 (US)**
Inventor : **White, Dwain Montgomery**
**2334 St Joseph Drive**
**Schenectady, New York 12309 (US)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) **Polyphenylene ether compositions.**

(57)   Moldable products obtained from extruded blends of diene based copolymers and pelletized salicylic acid ester capped polyphenylene ether have been found to exhibit improved resistance to loss in impact after being thermally recycled. The extruded moldable blends can be further used with a matrix material, such as a polyamide, polyester or polyetherimide.

EP 0 592 144 A1

This application is a continuation-in-part of copending application serial number 07/628,809, filed December 17, 1990.

## Background of the Invention

The present invention relates to extruded blends comprising pelletized salicylic acid ester capped polyphenylene ether and diene based rubber which exhibit improved resistance to loss of impact strength after the blends have been molded and thereafter thermally recycled.

Prior to the present invention, diene based rubber was often used as an impact modifier for polyphenylene ethers. It has been found, however, that when blends of polyphenylene ether and diene based rubber have been molded and thereafter recycled under severe thermal conditions, such as being heated to 300°C, the impact properties of the recycled molded material are often reduced. A possible explanation is that crosslinking occurs in the unsaturated portion of the rubber as a result of contact with oxidizing agents and/or high temperatures. Once crosslinked, the rubber no longer acts as an effective impact modifier and the toughness of the polyphenylene ether blend is diminished. Accordingly, in order to maintain the impact properties of polyphenylene ether blends subject to severe thermal histories, efforts have been made to find methods to improve the thermal stability of the diene based rubber.

As discussed in application serial no. 07/628,811, antioxidants often have been used as stabilizers for polyphenylene ethers, while metal deactivators and/or antioxidants have often been used to reduce metal catalyzed degradation in unsaturated rubber. Commercially available stabilizers have been used with butadiene copolymers, such as Kraton KD1102 manufactured by Shell Chemical Company, which is a styrene butadiene styrene (SBS) block copolymer. Antioxidants also have been found to minimize crosslinking in butadiene based rubber resulting from oxidation during high temperature processing.

Although metal deactivators and/or antioxidants have been effective for stabilizing diene based rubber, it has been found that blends of such stabilized diene based rubber and polyphenylene ether after molding often experience a reduction in toughness when thermally recycled as compared to their toughness when initially molded. One possible explanation is that crosslinking in the diene block results during the subsequent melt extrusion of the recycled thermoplastic, and the effectiveness of the diene based rubber as an impact modifier is reduced. Metal residues, such as copper in the polyphenylene ether, can catalyze the crosslinking of the unsaturated diene. Accordingly, in order to maintain the impact properties of molded blends of polyphenylene ether and diene based rubber which are subject to recycling, additional methods to improve the thermal stability of diene based rubber are constantly being sought.

## Summary of the Invention

The present invention is based on the discovery that the thermal stability of diene blocks in diene based rubber which is melt extruded with polyphenylene ether can be substantially improved, if polyphenylene ether is used having polysalicylate terminal groups, and the polysalicylate capped polyphenylene ether is melt extruded to pellets, prior to being blended with the diene based rubber. In addition, the resulting melt extruded blend of diene based rubber and pelletized polysalicylate capped polyphenylene ether, or a blend thereof with a matrix material, such as a polyamide, as defined hereinafter, can provide compositions having improved resistance to change in impact properties after being thermally recycled from the molded state.

## Statement of the Invention

There is provided by the present invention a polyphenylene ether composition which has enhanced impact strength when initially molded and which resists loss of impact strength upon being subjected to thermal recycling conditions at a temperature in the range of 250°C-350°C, or exposed to thermal aging conditions over a temperature in the range of 50°C-200°C, which comprises by weight, from about 5 to about 400 parts of a diene based rubber, per 100 parts of a pelletized salicylic acid ester capped polyphenylene ether.

The salicylic acid ester capped polyphenylene ethers and method for making which can be used in the practice of the present invention are shown in U.S. Patent 4,760,118, White et al, incorporated wherein by reference. The capping method can be achieved by melt extruding a mixture of a polyphenylene ether with at least one ester of salicylic acid or a substituted derivative thereof. Particularly useful polyphenylene ethers are poly(2,6-dimethyl-1,4-phenylene ethers) having a number average molecular weight within a range of about 3,000-40,000 and a weight average molecular weight within a range of about 20,000-80,000 as determined by gel permeation chromatography. The intrinsic viscosity is most often in the range of about 0.2-0.6 dl/g as measured in chloroform at 25°C. The polyphenylene ether can be reacted in the melt with at least one ester of salicylic acid, or anthranilic acid, or a substituted derivative thereof. Term "ester of salicylic acid" hereinafter means compounds in which the carboxy group, the hydroxy group or both have been esterified.

The capping agents which are generally found to give the best yields of the capped polyphenylene ethers of this invention are aryl salicylates such as phenyl salicylate, aspirin (i.e. acetylsalicylic acid), salicylic carbonate and polysalicylates, including both linear polysalicylates and cyclic compounds such as disalicylide and trisalicylide. Such compounds as phenyl salicylate and aspirin react to form acidic by-products (phenol and acetic acid), which may be undesirable. Therefore, the most preferred capping agents are salicylic carbonate and the polysalicylates, especially linear polysalicylates.

Of the capping agents which may be used according to the invention, such compounds as phenyl salicylate, aspirin and isatoic anhydride are commercially available. Salicylic carbonate is a known compound which may be prepared, for example, by the reaction of salicylic acid with phosgene. Disalicylide and trisalicylide are also known, as is their preparation by pyrolysis of aspirin; Baker et al., J.Chem.Soc. 1951, 201.

Linear polysalicylates may be prepared by anionic polymerization of salicylic carbonate; Saegusa et al., Polym. Bull. 1,341 (1979). They have also been found to be the product (rather than the reported disalicylide) of the treatment of salicylic carbonate with a catalytic amount of triethylamine; Dean et al., J.Chem.Soc., Perkin I, 1972, 2007. Linear polysalicylates are additionally obtainable by reacting salicylic acid with acetic anhydride or thionyl chloride, or by pyrolysis of aspirin at somewhat lower temperatures. Finally, the reaction of salicylic acid with phosgene in the presence of a tertiary amine such as triethylamine affords linear polysalicylates in high yield.

The polyphenylene ether can be heated in the melt with the capping agent. Typical reaction temperatures are in the range of about 225°-325°C. The capping reaction can be conveniently conducted in an extruder or similar equipment. Under certain circumstances, it may be advantageous to extrude the polyphenylene ether with vacuum venting, thus removing a substantial proportion of any amines present in the catalyst. The capping agent may then be advantageously introduced downstream from the polyphenylene ether feed.

The proportion of salicylic acid ester capping agent used should generally be sufficient to react with substantially all hydroxy end groups, including those with aminoalkyl substituents. In addition, it is generally beneficial to employ enough capping agent to react with any amine generated. There can be used about 1-12%, and preferably about 2-7% by weight of the salicylic acid ester capping agent, based on polyphenylene ether.

The term "diene based rubber" as used hereinafter, means rubber having unsaturated double bonds and includes for example, butadiene based rubber, which is preferred as well as isoprene based rubber.

Diene based rubber impact modifiers for polyphenylene ether compositions are well known in the art. They are typically derived from one or more monomers selected from the group consisting of olefins, vinyl aromatic monomers, acrylic and alkylacrylic acids and their ester derivatives in combination with conjugated dienes. Especially preferred impact modifiers are the rubbery high-molecular weight materials including natural and synthetic polymeric materials showing elasticity at room temperature. They include both homopolymers and copolymers, including random, block, radial block, graft and core-shell copolymers as well as combinations thereof.

In combination with the butadiene based rubber, there can be used polyolefins or olefin-based copolymers employable, such as poly(l-butene), poly(4-methyl-1-pentene), propylene-ethylene copolymers and the like.

A particularly useful class of materials which can be used as butadiene based rubber, are those derived from the vinyl aromatic monomers. These include, for example, modified polystyrenes, ABS type graft copolymers, AB and ABA type block and radial block copolymers and vinyl aromatic conjugated diene core-shell graft copolymers. Modified polystyrenes include rubber modified polystyrenes, such as butadiene rubber-modified polystyrene (otherwise referred to as high impact polystyrene or HIPS). Additional useful polystyrenes include copolymers of styrene and various monomers, including, for example, poly(styrene-acrylonitrile) (SAN), styrene-butadiene copolymers as well as the modified alpha- and para-substituted styrenes and any of the styrene resins disclosed in U.S. Patent 3,383,435, herein incorporated by reference. ABS types of graft copolymers are typified as comprising a rubbery polymeric backbone derived from a conjugated diene alone or in combination with a monomer copolymerizable therewith having grafted thereon at least one monomer, and preferably two, selected from the group consisting of monoalkenylarene monomers and substituted derivatives thereof as well as acrylic monomers such as acrylonitriles and acrylic and alkylacrylic acids and their esters.

An especially preferred subclass of vinyl aromatic monomer-derived resins is the block copolymers comprising monoalkenyl arene (usually styrene) blocks and conjugated diene (e.g., butadiene or isoprene) blocks and represented as AB and ABA block copolymers.

Suitable AB type block copolymers are disclosed in, for example, U.S. Patents 3,078,254; 3,402,159; 3,297,793; 3,265,765 and 3,594,452 and UK Patent 1,264,741, all incorporated herein by reference. Examples of typical species of AB block copolymers are polystyrene-polybutadiene (SBR), polystyrene-polyisoprene and poly(alpha-methylstyrene)-polybutadiene. Such AB block copolymers are available commercially from a number of sources, including Phillips Petroleum under the trademark SOLPRENE.

Examples of triblock copolymers include polystyrene-polybutadiene-polystyrene (SBS), polystyrene-polyisoprene-polystyrene (SIS), poly($\alpha$-methylstyrene)-polybutadiene-poly-($\alpha$-methylstyrene) and poly($\alpha$-methylstyrene)-polyisoprene-poly-($\alpha$-methylstyrene). Particularly preferred triblock copolymers are available commercially as CARIFLEX®, and KRATON D® from Shell.

Another class of butadiene based rubbers or impact modifiers is derived from conjugated dienes. While many copolymers containing conjugated dienes have been discussed above, additional conjugated diene modifier resins include, for example, homopolymers and copolymers of one or more conjugated dienes including, for example, polybutadiene, butadiene-styrene copolymers, butadiene-glycidyl methacrylate copolymers, isoprene-isobutylene copolymers, chlorobutadiene polymers, butadiene-acrylonitrile copolymers, polyisoprene, and the like. Ethylenepropylene-diene monomer rubbers may also be used. These EPDM's are typified as comprising predominantly ethylene units, a moderate amount of propylene units and up to about 20 mole percent of non-conjugated diene monomer units. Many such EPDM's and processes for the production thereof are disclosed in U.S. Patents 2,933,480; 3,000,866; 3,407,158; 3,093,621 and 3,379,701, incorporated herein by reference.

Other suitable impact modifiers are the core-shell type graft copolymers. In general, these have a predominantly conjugated diene rubbery core or a predominantly cross-linked acrylate rubbery core and one or more shells polymerized thereon and derived from monoalkenylarene and/or acrylic monomers alone or, preferably, in combination with other vinyl monomers. Such core-shell copolymers are widely available commercially, for example, from Rohm and Haas Company under the trade names KM-611, KM-653 and KM-330, and are described in U.S. Patents 3,808,180; 4,034,013; 4,096,202; 4,180,494 and 4,292,233.

The preferred impact modifiers are block (typically diblock, triblock or radial teleblock) copolymers of alkenylaromatic compounds and dienes or mixtures of dienes and olefins. Most often, at least one block is derived from styrene and at least one other block from at least one of butadiene, or isoprene. Especially preferred are the triblock copolymers with polystyrene end blocks and diene-derived midblocks. The weight average molecular weights of the impact modifiers are typically in the range of about 50,000-300,000. Block copolymers of this type are commercially available from Shell Chemical Company under the trademark KRATON, and include KRATON D1101 and D1102.

The moldable blends of salicylic acid ester capped polyphenylene ethers and butadiene based rubbers can be made by melt blending and preferably melt extruding the ingredients at temperatures of from 250°C to 350°C. The resulting blend can be pelletized and thereafter blended with organic polymeric matrix materials, such as polyamides, polyesters, polystyrene and polyetherimides. Dry blending followed by melt extrusion at the aforementioned melt temperatures will provide effective results. As previously indicated, the incorporation of the matrix material can include "down stream feeding" where the matrix material and/or the diene based rubber can be added to the extruder following the earlier melt extrusion of the polysalicylate capped polyphenylene ether.

A proportion of from 60 to 200 parts by weight of the matrix material per 100 parts of polyphenylene ether will provide effective results.

Polyamides suitable as matrix material in the preparation of the compositions of this invention may be made by any known method, including the polymerization of a monoamino-monocarboxylic acid or a lactam thereof having at least 2 carbon atoms between the amino and carboxylic acid group, of substantially equimolar proportions of a diamine which contains at least 2 carbon atoms between the amino groups and a dicarboxylic acid, or of a monoaminocarboxylic acid or a lactam thereof as defined above together with substantially equimolar proportions of a diamine and a dicarboxylic acid. (The term "substantially equimolar" proportions includes both strictly equimolar proportions and slight departures therefrom which are involved in conventional techniques for stabilizing the viscosity of the resultant polyamides) The dicarboxylic acid may be used in the form of a functional derivative thereof, for example, an ester or acid chloride.

Examples of the aforementioned monoaminomonocarboxylic acids or lactams thereof which are useful in preparing the polyamides include those compounds containing from 2 to 16 carbon atoms between the amino and carboxylic acid groups, said carbon atoms forming a ring with the -CO-NH- group in the case of a lactam. Particular examples of aminocarboxylic acids and lactams are $\varepsilon$-aminocaproic acid, butyrolactam, pivalolactam, $\varepsilon$-caprolactam, capryllactam, enantholactam, undecanolactam, dodecanolactam and 3- and 4-aminobenzoic acids.

Diamines suitable for use in the preparation of the polyamides include the straight chain and branched chain alkyl, aryl and alkaryl diamines. Such diamines include, for example, those represented by the general formula

$$H_2N(CH_2)_nNH_2$$

wherein n is an integer of from 2 to 16. Illustrative diamines are trimethylenediamine, tetramethylenediamine, pentamethylenediamine, octamethylenediamine, hexamethylenediamine (which is often preferred), trimethylhexamethylenediamine, m-phenylenediamine and m-xylylenediamine.

The dicarboxylic acids may be represented by the formula

$$HOOC-Y-COOH$$

wherein Y is a divalent aliphatic or aromatic group containing at least 2 carbon atoms. Examples of aliphatic acids are sebacic acid, octadecanedioic acid, suberic acid, glutaric acid, pimelic acid and adipic acid. Aromatic acids, such as isophthalic and terephthalic acids, are preferred.

In addition to polyamides, other matrix material which can be used are polystyrene and polyetherimides which are shown by Heath et al, U.S. Pat. 3,847,867 incorporated herein by reference. Polyesters, such as polyalkyleneterephthalate shown by U.S. Patent 4,866,130, incorporated by reference also can be used.

These polyesters generally have number average molecular weights in the range of about 20,000-70,000, as determined by intrinsic viscosity (IV) at 30 °C in a mixture of 60% (by weight) phenol and 40% 1,1,2,2-tetrachloroethane. When resistance to heat distortion is an important factor the polyester molecular weight should be relatively high, typically above about 40,000.

Such polyesters are ordinarily prepared by the reaction of at least one diol such as ethylene glycol, 1,4-butanediol or 1,4-cyclohexanedimethanol with at least one aromatic dicarboxylic acid such as isophthalic or terephthalic acid, or lower alkyl ester thereof. Poly(ethylene terephthalate) and poly(butylene terephthalate), and especially the latter are preferred.

In order that those skilled in the art will be better able to practice the present invention, the following examples are given by way of illustration and not by way of limitation. All parts are by weight.

Example

Polysalicylate-capped polyphenylene ether was prepared in accordance with the teaching of U.S. Patent 4,760,118. There was added 6.5 weight % of polysalicylate to a polyphenylene ether (PPE) resin having an IV of about 0.4 dl/g in chloroform at 25°C during melt extrusion using a twin screw extruder. There was obtained polysalicylate-capped polyphenylene ether pellets, referred to hereinafter as "PPE-salicylate pellets".

Polyphenylene ether pellets, "PPE virgin pellets" also were prepared following the above procedure by extruding the PPE resin in the absence of polysalicylate.

Blends of PPE resin powder, PPE-salicylate pellets, and PPE virgin pellets,and KD 1102 (a styrene-butadiene-styrene block copolymer produced by Shell Chemical) or "SBS" were prepared. The PPE/KD 1102 blends were made with 80 parts of PPE resin in pellet or powder form as described above, and 20 parts of SBS. In addition, commercial stabilizers were added to some of the blends to assess their effect on blend thermal stability after extrusion to test pellets followed by molding.

The blends were prepared using two procedures. In one procedure, the PPE resin powder was dry-mixed with KD 1102, or a KD 1102-stabilizer mixture. The dry mixed blends were then extruded to form test pellets. In a second procedure, PPE salicylate pellets, or PPE virgin pellets were mixed with KD 1102, and the resulting formulation also was extruded to form test pellets. The thermal stabilities of the various PPE/KD 1102 blends were evaluated.

The respective test pellets were subjected to two different compression molding procedures to simulate mild and severe thermal recycling histories. For a mild thermal recycling, a temperature of 240°C was used, and the molded extrudate held for 1 minute prior to quenching. Quenching was effected by introducing the sample in the molding press having platens at a temperature of about 20°C.

A more severe thermal recycling history was used when the samples were heated to 300°C and held for 20 minutes prior to quenching after the initial molding procedure.

Rubber stability was determined by using dynamic mechanical analysis to measure the temperature of the loss peak associated with the glass transition temperature of the SBS based rubber. An increase in the glass transition temperature would indicate an increase in the crosslink density. The results are shown in Table I below, where Ultranox 257, is a hindered phenol manufactured by the Speciality Chemical Co. of GE, and Seenox 412S, is a thioester manufactured by the Argus Company:

### Table I
### Impact Modifier Transistions in PPE/KD 1102 Blends

| The PPE component in the KD 1102 Blend Formulation[a] | Impact Modifier Transition (°C) | |
|---|---|---|
| | Mild Processing 1 min at 240°C | Severe Processing 20 min at 300°C |
| KD 1102 | -80 | -54 |
| Powdered PPE/KD1102 | -51 to -62 | 15 to 45 |
| Powdered PPE/KD1102/Seenox 412S/Ultranox 257[b] | -61 | 5 |
| Virgin PPE Pellets/KD1102 | -71 to -81 | -24 to 2 |
| Polysalicylate-capped PPE Pellets/KD1102 | -82 | -44 |

[a] All formulations consist of 80 parts by wgt. PPE resin and 20 parts by wgt KD 1102

[b] Seenox 412S is a thioester stabilizer supplied by Argus Chemical Company. Ultranox 257 is a hindered phenol stabilizer supplied by GE Specialty Chemicals. Both stabilizers were added to the formulation at a concentration of 1 part by wgt.

The results in Table 1 show that the thermal stability of the KD 1102 impact modifier is adversely affected when molded with powdered PPE. While the addition of commercial stabilizers to the powdered PPE resin formulation provided some benefit, the thermal stability of the impact modifier was not as good as when PPE pellets were used. In addition, the use of polysalicylate-capped PPE resin pellets provided even greater improvement over standard extruded PPE pellets with respect to impact modifier stability.

One possible explanation for the poor thermal stability of KD 1102 when blended directly with the polyphenylene ether resin powder followed by molding the resulting blend under severe processing conditions is that there are components in the polyphenylene ether resin powder which catalyze the crosslinking reaction of the butadiene block in KD1102. Addition of the stabilizers are shown to somewhat reduce the increase in the rubber Tg during severe processing. The use of pelletized polysalicylate capped polyphenylene ether shows that further improvements in stability can be achieved under both mild and severe processing conditions.

Although the above example is directed to only a few of the very many variables which can be used in the practice of the present invention, it should be understood that the present invention is directed to the use of a much broader variety of polysalicylate end capped polyphenylene ethers, butadiene based rubber and stabilizers as set forth in the description preceding these examples.

## Claims

1. A polyphenylene ether composition which has enhanced impact strength when initially molded and which resists loss of impact strength upon being subjected to thermal recycling conditions at a temperature in the range of 250°C-350°C, or exposed to thermal aging conditions over a temperature in the range of 50°C-200°C, which comprises by weight from about 5 to about 400 parts of a diene based rubber, per 100 parts of a pelletized salicylic acid ester capped polyphenylene ether.

2. A polyphenylene ether composition in accordance with claim 1, where the polyphenylene ether is a salicylic acid ester capped poly(2,6-dimethyl-1,4-phenylene ether).

3. A polyphenylene ether composition in accordance with claim 1 or claim 2 where the diene based rubber is a styrene-butadiene-styrene copolymer.

4. A polyphenylene ether composition in accordance with any preceding claim, which is an extrudate of a diene based rubber, and 60 to 200 parts by weight of a matrix organic polymer, per 100 parts of the pelletized salicylic acid ester capped polyphenylene ether.

5. An extrudate in accordance with claim 4, which utilizes a polyamide as a matrix material.

6. An extrudate in accordance with claim 4, which utilizes a polyester as a matrix material.

7. An extrudate in accordance with claim 4, which utilizes a polyetherimide as a matrix material.

8. An extrudate in accordance with claim 4, which utilizes polystyrene as a matrix material.

9. A polyphenylene ether composition in accordance with any preceding claim, where the pelletized polyphenylene ether is capped with about 1-12% by weight of salicylic acid ester.

10. A polyphenylene ether composition in accordance with any preceding claim, where the pelletized polyphenylene ether is capped with about 2-7% by weight of salicylic acid ester.

## European Patent Office

## EUROPEAN SEARCH REPORT

Application Number

EP 93 30 7742

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | DATABASE WPI<br>Week 9236,<br>Derwent Publications Ltd., London, GB;<br>AN 92-292855<br>& CA-A-2 057 147 (W. D. RICHARDS)<br>* abstract * | 1-10 | C08L71/12 |
| A | EP-A-0 491 187 (GENERAL ELECTRIC COMPANY)<br>* page 5, line 16 - line 20; claims * | 1-8 | |
| D,A | EP-A-0 493 674 (GENERAL ELECTRIC COMPANY)<br>* claims * | 1-8 | |
| A | EP-A-0 501 154 (GENERAL ELECTRIC COMPANY)<br>* claims 1-8; examples 1-5 * | 1-5 | |
| A | EP-A-0 498 284 (GENERAL ELECTRIC COMPANY)<br>* page 5, line 51 - page 6, line 32 *<br>* page 7, line 5 - page 8, line 9; claims;<br>examples * | 1-5,9,10 | |
| | ----- | | TECHNICAL FIELDS SEARCHED (Int. Cl.5)<br><br>C08L |

The present search report has been drawn up for all claims

| Place of search | Date of completion of the search | Examiner |
|---|---|---|
| BERLIN | 12 JANUARY 1994 | BOEKER R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document